# EUROPÄISCHE PATENTSCHRIFT

(11) **EP 2 867 961 B1**
(45) Veröffentlichungstag und Bekanntmachung des Hinweises auf die Patenterteilung: **01.11.2017**
(21) Anmeldenummer: 13741968.5
(22) Anmeldetag: 24.06.2013
(51) Int. Cl.: H02G 3/04

(54) **KANALSYSTEM**
CHANNEL SYSTEM
SYSTÈME DE CANAL

(30) Priorität: 29.06.2012 DE 102012013034
(43) Veröffentlichungstag der Anmeldung: 06.05.2015
(73) Patentinhaber: Rixen, Wolfgang, 42699 Solingen (DE); Pies, Gerrit, 42699 Solingen (DE)
(72) Erfinder: PIES, Gerrit, 42699 Solingen (DE); RIXEN, Wolfgang, 42699 Solingen (DE)
(74) Vertreter: Draudt, Axel Hermann Christian
(86) Internationale Anmeldenummer: PCT/EP2013/001848
(87) Internationale Veröffentlichungsnummer: WO 2014/000877

(56) Entgegenhaltungen:
- EP-A1- 2 280 466
- WO-A1-2009/095871
- DE-A1- 19 932 561
- DE-U1- 8 409 982
- DE-U1- 29 910 342
- FR-A5- 2 097 279
- US-A- 5 967 818

## Beschreibung

Die Erfindung betrifft ein Kanalsystem mit mindestens einem ein mehradriges Flachkabel und eine daran angeschlossene Steckdose aufweisenden ersten Kanal, der eine Hinterseite, eine Unterseite sowie eine mit einem lösbar daran befestigbaren Frontdeckel vorhandenen Vorderseite aufweist, und mit einer lösbar befestigten oberen Abdeckung.

Ein derartiges Kanalsystem ist aus der FR 2 097 279 A5 bekannt. Allerdings ist es bei diesem Kanalsystem schwierig, eine exakte Verbindung herzustellen.

In der letzten Zeit ist immer stärker der Bedarf an derartigen Kanalsystemen gestiegen. Dies hat vielerlei Gründe. Zum einen müssten bei Altbauten keine neuen Schlitze geschlagen werden, um die entsprechenden Leitungen zu verlegen.

Zum anderen werden auch viele Häuser neu in Modulbauweise hergestellt, bei denen es nicht möglich ist, schon bereits vorher, wie zum Beispiel bei Fertighäusern, die Position der einzelnen Steckdosen oder andere elektrische Elemente festzulegen. Besonders wichtig ist, nicht nur bei Altsanierung, sondern auch bei Neuplanungen, die große Anzahl der Elektrogeräte entsprechend versorgen zu können.

Dazu gibt es derzeit lediglich Kanalsysteme, die mit Steckdosen versehen werden können, die allerdings keine freie Positionswahl für die Montage mehr ermöglich.

Der Erfindung liegt daher die Aufgabe zugrunde, ein Kanalsystem der eingangs genannten Art anzugeben, das mit wenig einfachsten Mitteln eine hohe Flexibilität der Anordnung insbesondere von Steckdosen ermöglicht.

Diese Aufgabe wird erfingdungsgemäß bei einem Kanalsystem der eingangs genannten Art dadurch gelöst, dass die obere Abdeckung im Bereich der lösbar befestigten Steckdose entfernt ist, der elektrische Kontakt zwischen dem Flachkabel und der Steckdose über eine Schneidklemme erfolgt, deren erster Teil auf dem Flachkabel aufliegt und deren zweiter die Schneidkontakte aufweisender Teil an der Steckdose angeordnet ist, und dass die Steckdose lösbar befestigt ist.

Der Kern der Erfindung liegt darin, mit sehr geringem Aufwand zumindest ein mehradriges Flachkabel aufnehmenden ersten Kanal zur Verfügung zu stellen, der sehr leicht auf Putz verlegt werden kann.

Der Hauptvorteil liegt daran, dass es mit Hilfe des oben angegebenen Kanalsystem möglich ist, an jeder beliebigen Stelle eine funktionstüchtige Steckdose mit einfachsten und somit sehr sicheren Handgriffen anzubringen.

Eine Besonderheit liegt dabei darin, die Schneidklemme 2-teilig auszuführen, wobei der erste Teil einfach auf den Bereich des Flachkabels konturenkonform gedrückt werden kann und als Führung für die Schneidkontakte dient. Diese Schneidkontakte sind in dem zwelten Teil der Schneidklemme angeordnet, und zwar derart, dass sie mit den Kontaktstiften für die Steckdose in Verbindung gebracht sind. Somit ist dann der zweite Teil vor der Montage mit der übrigen Steckdose verbunden. Es müssen nunmehr lediglich die zwei Teile der Schneidklemme miteinander verbunden werden. Dabei sind die ersten und zweiten Teile so ausgeformt, dass sie nach einer Verrastung nicht mehr auseinander genommen werden können. Diese Verrastung ist daher eine sogenannte irreversible Verrastung.

Somit ist auf einfachste Art und Weise das Anbringen einer Steckdose möglich, und zwar aufgrund der oben genannten konstruktiven Merkmale.

Damit die Schneidklemme, insbesondere der erste Teil nach einmaliger Montage nicht mehr entfernt werden kann, ist es vorteilhaft, wenn die Schneidklemme irreversibel mit dem Kanal verbunden ist, und zwar mittels entsprechenden Verrastungen. Somit wirkt die eingebrachte Schneidklemme quasi wie ein "Pflaster", allerdings mit dem großen Unterschied, dass sie jederzeit wieder zum Anschluss einer Steckdose verwendet werden kann. Dazu müsste dann nur lediglich das entsprechende Steckdosengehäuse mit den Kontaktstiften in die entsprechenden Öffnungen zwischen den ersten und beiden Teilen der Schneidklemme wieder eingreifen.

Daher ist es vorteilhaft, wenn die nicht schneidenden Enden der Schneidklemmen innerhalb des zweiten Teils mittels in der Steckdose angeordneter Kontaktstifte lösbar elektrisch leitend verbunden sind.

Eine vorteilhafte Weiterbildung der Erfindung sieht vor, dass der zweite Teil irreversibel mit dem ersten Teil verrastet ist, nachdem die Steckdose in Richtung des Kanals verschwenkt worden ist und gleichzeitig die Schneidkontakte in das Flachkabel eingedrungen sind.

Dabei gibt es selbstverständlich mehrere Schwenkmöglichkeiten, und zwar bei bereits angebrachtem erstem Kanal drei Möglichkeiten. Es ist daher vorteilhaft, wenn die Steckdose entweder in Längsachsenrichtung des Kanals im Uhrzeigersinn, entgegen des Uhrzeigersinnes oder quer zur Längsachsenrichtung des Kanals zur Montage verschwenkt worden ist.

Wie oben bereits kurz erwähnt, ist es ebenfalls vorteilhaft, wenn die Steckdose von dem Kanal entfernbar ist und der zweite Teil irreversibel mit dem ersten Teil verrastet bleibt und die vom Flachkabel wegweisenden Enden der Schneidkontakte abdeckt.

Für eine besseren Halt der montierten Steckdose ist es von Vorteil, wenn die Steckdose ein mit dem Kanal verbindbares Befestigungsprofil aufweist, dass ein Steckdosengehäuse entweder in dessen Inneren abstützt oder mindestens teilweise aufnimmt, wobei die in Kanalrichtung weisenden Oberflächen des Steckdosengehäuses befestigungsprofilfrei sind.

Falls für das Flachkabel ein dreiadriges Kabel verwendet werden sollte, das einen 0-Leiter aufweist, ist es aus Sicherheitsgründen vorteilhaft, wenn dieser 0-Leiter bei der Montage der Steckdose zuerst von dem entsprechenden Schneidkontakt mit der Steckdose verbunden wird und sich die beiden anderen Adern daran anschließen. Dazu ist es dann von Vorteil, wenn die Unterseite derartig profiliert ist, dass die dazu passende zur Unterseite weisende Oberfläche des mehradrigen Flachkabels lediglich in einer vorbestimmten Ausrichtung zusammen fügbar ist, damit eine Anordnung der nebeneinander liegenden Kabelstränge des Flachkabels immer gleich ist. Dadurch ist dann nämlich immer die Position des 0-Leiters festgelegt.

Bei der Erstellung des Stromverteilungssystems, insbesondere der Steckdosen an den gewünschten Stellen, ist es manchmal wünschenswert, für entsprechende Stromabnehmer, die auch mittels Kabel ihre Signale erhalten, diese in dem Kabelsystem mit aufzunehmen. Dabei ist es dann von Vorteil, wenn durch einen zweiten Kanal, der von der Unterseite sich der Abdeckung entgegengesetzt erstreckt, eine Aufnahmemöglichkeit gegeben ist.

Dieser zweite Kanal kann ebenfalls von dem Frontdeckel lösbar verschlossen werden.

Es kann des weiteren wünschenswert sein, zusätzlich noch Heizungsleitungen in das Kanalsystem mit aufzunehmen, und zwar nicht nur aus optischen Gründen. Das Kanalsystem weist nämlich zusätzlich noch eine große Oberfläche auf, die als Strahlungsquelle für die Heizrohre bzw. deren Wärme verwandt werden kann. Dazu ist es dann von Vorteil, einen dritten Kanal, der in seinem Inneren mit Halteelementen für Heizungsleitungen versehen ist und sich entweder an den ersten Kanal oder an dem zweiten Kanal anschließt.

Obwohl das Befestigungsprofil durch die entsprechende Verrastung, die nicht irreversibel ist, mit dem ersten Kanal eine ausreichende Festigkeit gegeben ist, ist es doch vorteilhaft, wenn das Befestigungsprofil im ersten Kanal mittels einer Sicherungsschraube verspreizt wird.

Weiterhin ist es möglich, wenn der erste Kanal entweder mit dem zweiten Kanal oder/und mit dem dritten Kanal einstückig ausgebildet ist.

Eine besonders gute Zwangsführung für die Verschwenkbewegung der Steckdose bei ihrer Montage an dem Kanalsystem ist dadurch gegeben, wenn der erste Teil mittels eines Filmscharniers mit dem zweiten Teil der Schneidklemme verbunden ist.

Selbstverständlich mit Ausnahme des Flachkabels besteht das Material des Kabelsystems aus Metall, Kunststoff oder einer Kombination daraus.

Weitere Merkmale und Vorteile der Erfindung ergeben sich aus der folgenden Beschreibung zweiter Ausführungsbeispiele sowie aus den Figuren, auf die Bezug genommen wird. Es zeigen:
- Fig.1: eine Explosionsdarstellung eines ersten Ausführungsbeispiels des Kanalsystems mit Steckdose;
- Fig.2: eine Explosionsdarstellung eines zweiten Ausführungsbeispiels des Kanalsystems mit Steckdose;
- Fig.3: erste bis dritte Kanäle eines Kanalsystems ohne Zuätze;
- Fig.4: ein der Fig.3 ähnliches Bild mit zusätzlichem Flachkabel vor der Einlegung in den Kanal;
- Fig.5: ein der Fig.3 ähnliches Bild mit Flachbandkabel und angesetzter Steckdose vor deren Befestigung;
- Fig.6: eine ähnliche Ansicht wie Fig.5 allerdings min der Bewegung zum Befestigen der Steckdose, in diesem Fall eine Drehbewegung;
- Fig.7: die Endposition der Befestigungsbewegung gemäß Fig.6 mit zwei zusätzlichen Querschnittsansichten einmal außerhalb und einmal innerhalb des Befestigungsprofils;
- Fig.8: eine Perspektivansicht der befestigten Steckdose kurz bevor die obere Abdeckung aufgesetzt wird, wie sie in dem Querschnittsbild gezeigt ist;
- Fig.9: eine der Fig.8 ähnliche Perspektivansicht von der Steckdosenseite aus gesehen kurz bevor der Frontdeckel eingerastet wird, dessen Endstellung in der Querschnittsansicht gezeigt ist;
- Fig.10: zwei Ansichten die die Steckdose im montiertem Zustand und in demontiertem Zustand von dem Flachkabel bzw. der Schneidklemme darstellt;
- Fig.11: eine der Fig.6 ähnliche Ansicht allerdings mit Abklappen der Steckdose von dem ersten Kanal;
- Fig.12: den Endzustand nach der Abschwenkbewegung gemäß Fig.11 mit einer Einzeldarstellung der als Schutz dienende und übrig gebliebene Schneidklemme;
- Fig.13: eine der Fig.12 ähnliche Darstellung kurz bevor die obere Abdeckung und der Frontdeckel zum schließen des Kanalsystems eingerastet sind; und
- Fig.14: den Endzustand nach der Verrastung der einzelnen Teile gemäß Fig.13.

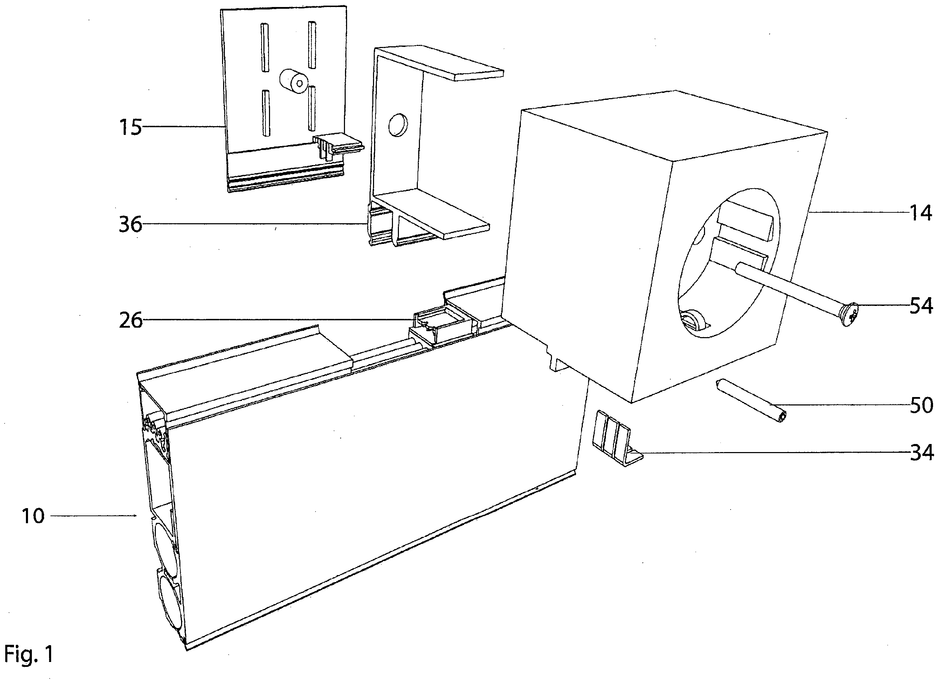

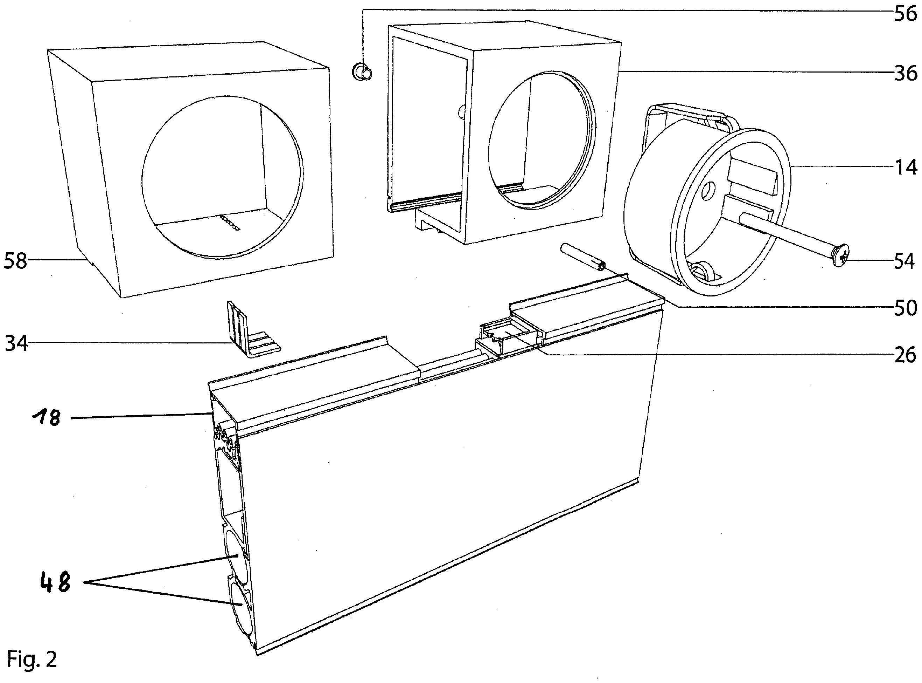

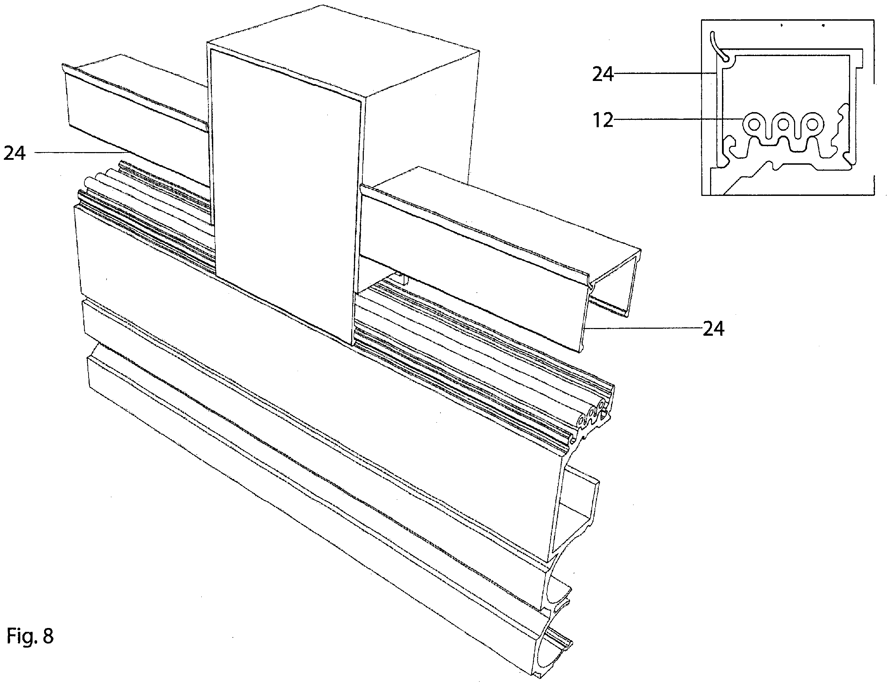

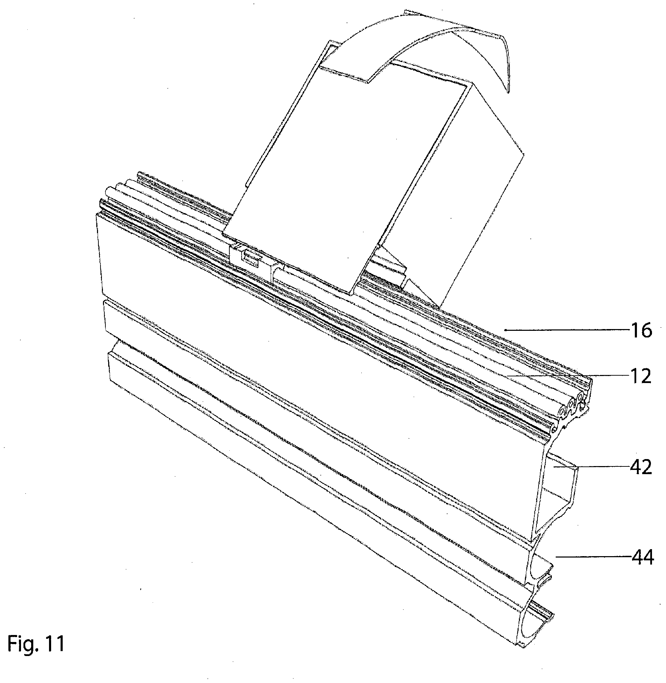

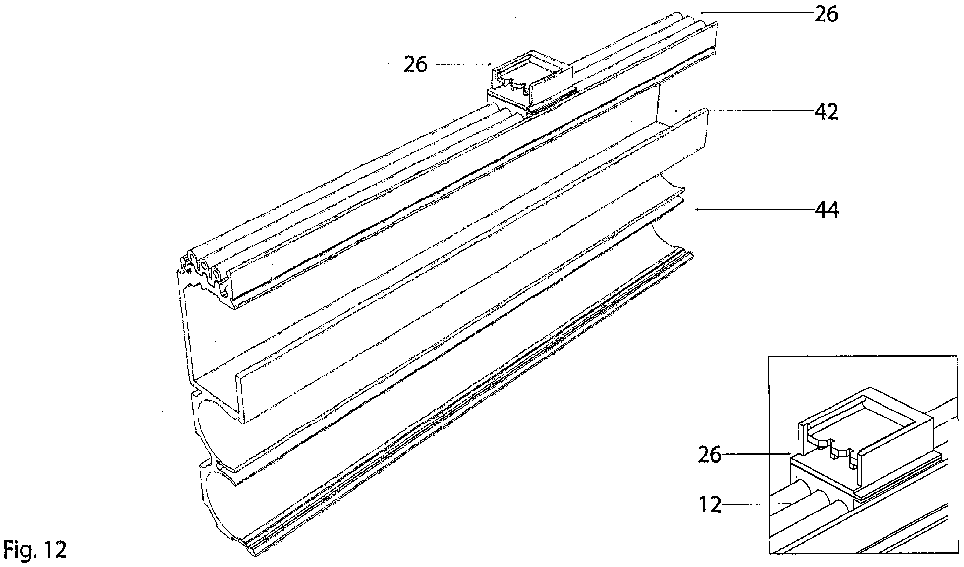

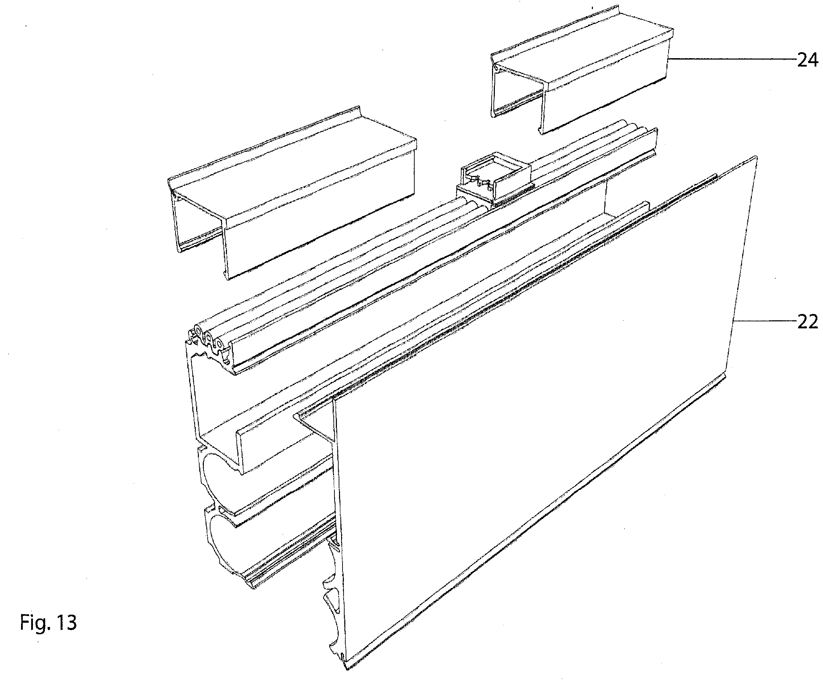

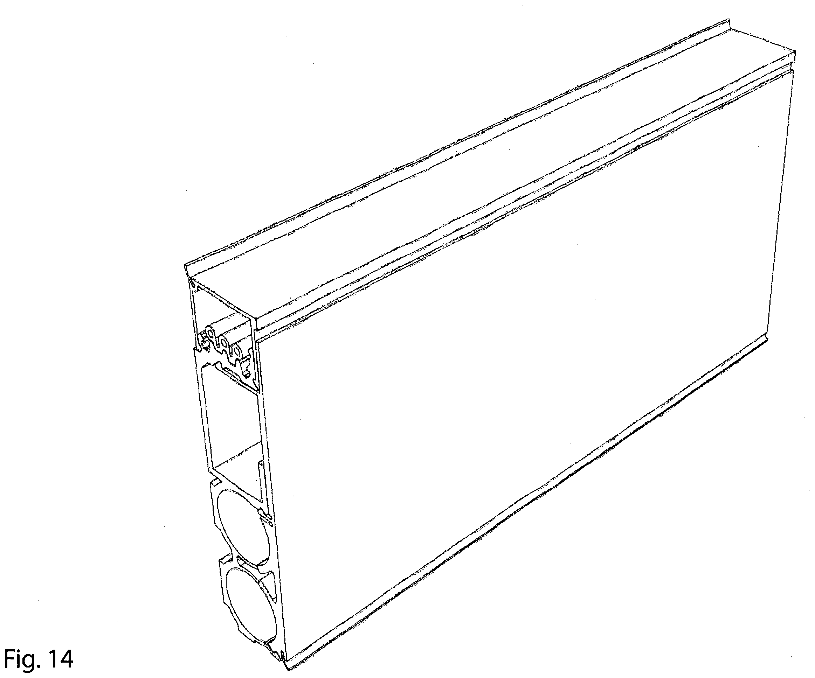

Anhand der Figuren 1 bis 14 werden nunmehr zwei Ausführungsbeispiele eines bei beiden Ausführungsbeispielen vorhandenen ersten bis dritten Kanals 16, 42 und 44 beschrieben. Dabei bedeuten gleiche Bezugszeichen gleiche Merkmale, sofern nichts anderes ausgesagt ist.

Selbstverständlich gilt die folgende Beschreibung, zumindest deren entsprechenden Teile, auch einem Kanalsystem 10 mit lediglich einem ersten Kanal 16 oder einem ersten und zweiten Kanal 16 und 42 oder einem ersten und dritten Kanal 44. Das Hauptaugenmerk liegt daher auf dem ersten Kanal 16, der mit einem Flachkabel 12, dass in diesem Fall drei Kabelstränge 40 aufweist, versehen ist.

Die nunmehr beschriebenen Kabelsysteme 10 enthalten jeweils mindestens ein mehradriges Flachkabel 12, an dem eine Steckdose 14 an einem ersten Kanal 16 angeschlossen ist.

Der erste Kanal 16 weist eine Hinterseite 18, eine Unterseite 20 und eine Vorderseite 21 auf.

Selbstverständlich könnten die Hinterseite 18, die Unterseite 20 und die Vorderseite 21 entweder jeweils einzeln oder auch einstückig mit der Unterseite 20 verbunden sein, und zwar mit Raststeck-Verbindungen. Bei den beschriebenen Ausführungsbeispielen sind aber die Hinterseite 18 und die Vorderseite 21 einstückig mit einer oberen Abdeckung 24 verbunden, so dass die Unterseite 20, die das in diesem Falle dreiadrige Flachkabel 12 aufnimmt, mit diesen oben beschriebenen Teilen zur Ausbildung des ersten Kanals 16 verrastet wird.

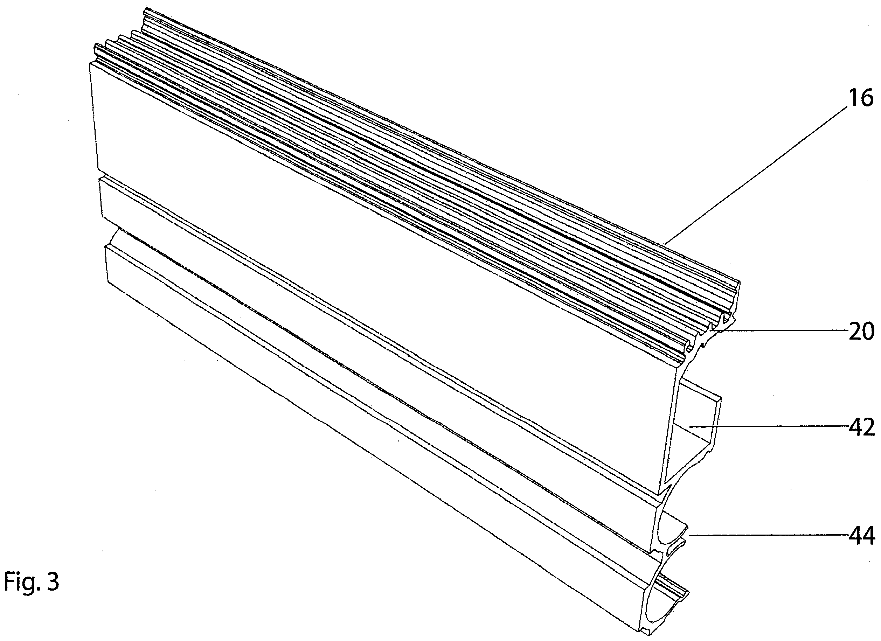

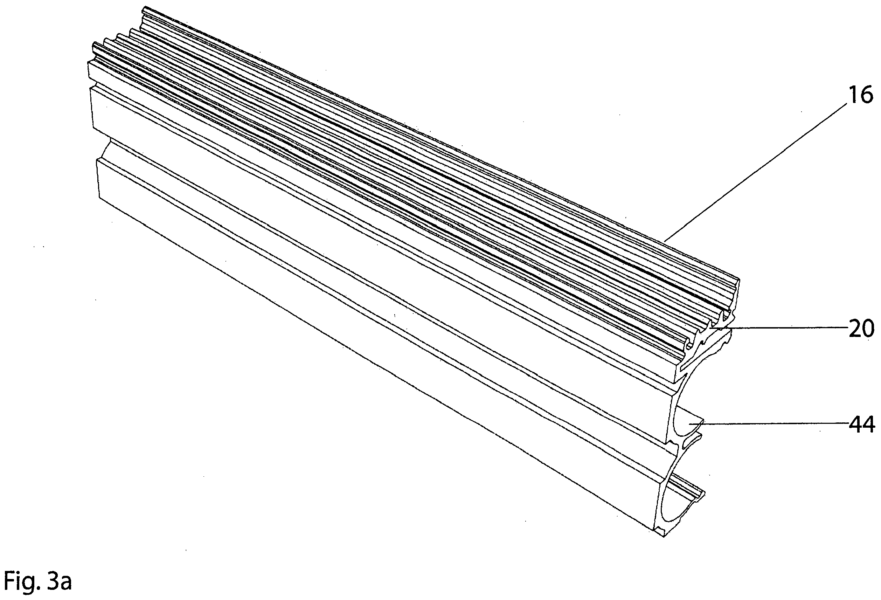

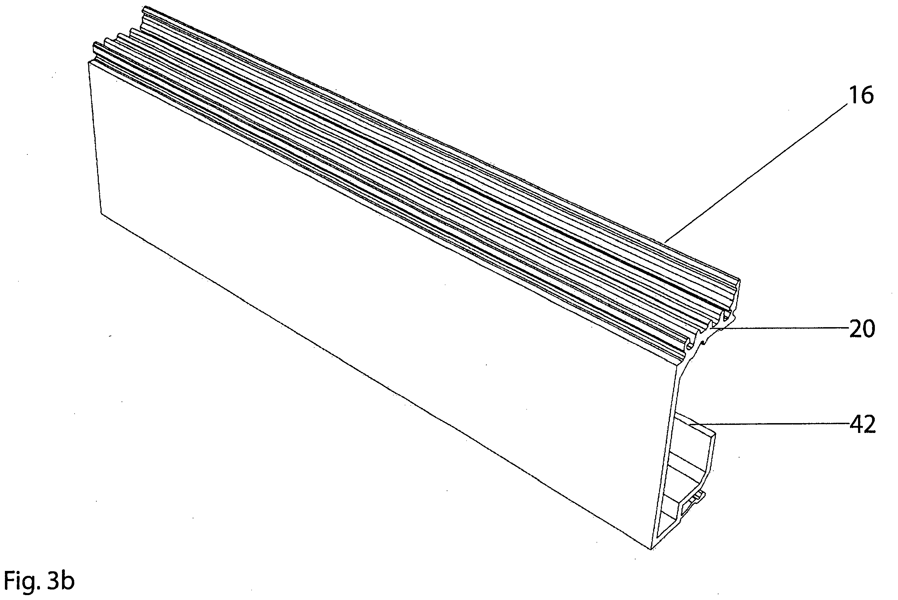

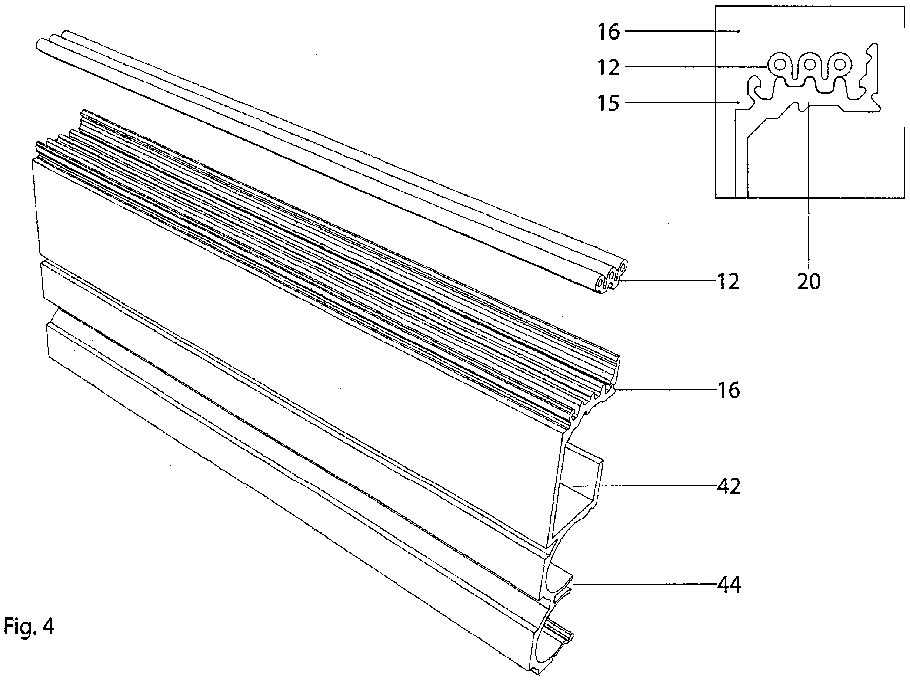

Insbesondere aus Fig.3 ist entnehmbar, dass die Unterseite 20 des ersten Kanals 16 zur Aufnahme des Flachkabels 12 eine bestimmte Profilierung aufweist, die, wie insbesondere in Fig.4 zu sehen, im Querschnitt unsymmetrisch ausgebildet ist. Die zur Unterseite 20 weisende Oberfläche des Flachkabels weist eine Negativkontur der Unterseite 20 auf, so dass, um eine ebene Oberfläche des eingelegten Flachkabels 12 zu erzielen, es nur lediglich eine Position gibt, das Flachkabel 12 auf die Unterseite 20 aufzulegen.

Der Grund dazu liegt darin, dass für eine korrekte elektrische Verbindung mit der Steckdose 14 die anzuschließenden Kabel eine bestimmte Ausrichtung aufweisen müssen. Selbstverständlich ist die Reihenfolge der nebeneinander angeordneten Kabelstränge beliebig, allerdings wird bei dem gezeigten Ausführungsbeispielen der 0-Leiter so angeordnet, dass er der Vorderseite 21 am nächsten liegt, damit bei einem Einschwenken und Einschneiden der Steckdose 14 bzw. der Schneidkontakte 30 aus Sicherheitsgründen der 0-Leiter als erster mit der Steckdose 14 kontaktiert wird.

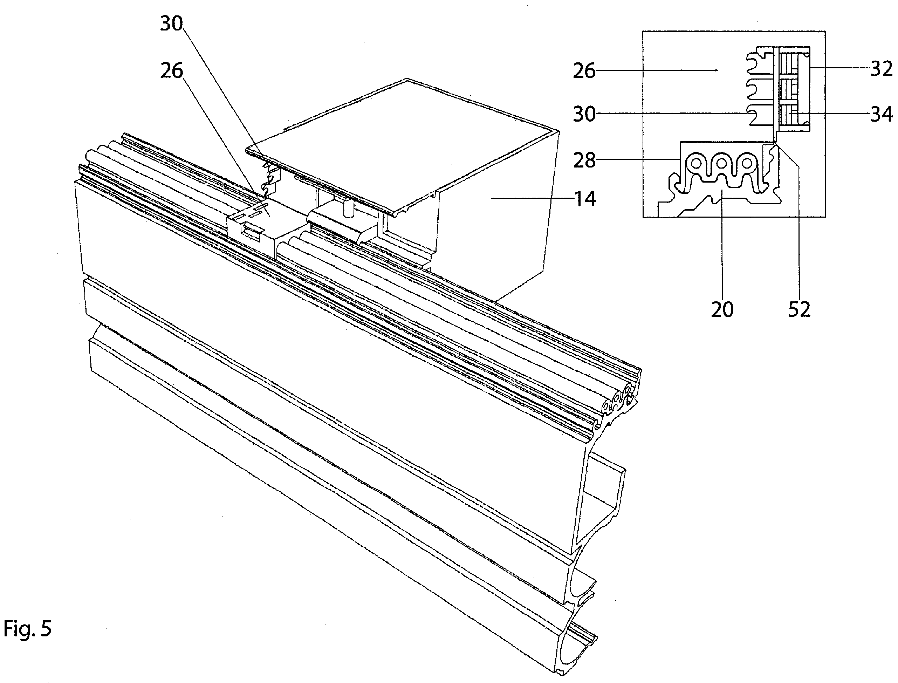

Auf welche Art und Weise dies durchgeführt wird, ist am besten in Fig.5 zu sehen. Da die Schneidklemme 26 mit ihrem ersten Teil 28 fest auf die Kabelstränge 40 des Flachkabels 12 gelegt wird, entsteht schon ein Verrastungshalt mit der Unterseite 20 des ersten Kanals 16.

Es gibt sicherlich eine Vielzahl von Arten, die beiden Teile 28 und 32 der Schneidklemme 26 zusammen zu fügen. Als besonders vorteilhaft hat es sich aber herausgestellt, die beiden Teile 28 und 32 mittels eines Filmscharniers 52 zu verbinden, so dass die Schneidklemme 26 bereits mit der Steckdose 14 verbunden werden kann, und zwar indem im das zweite Teil 32 in entsprechende Kontaktstifte 34, die sich in der Steckdose 14 befinden, eingeschoben sind. Diese Kontaktstifte 34 berühren die Schneidkontakte 30, die in Richtung des ersten Teils 28 weisen.

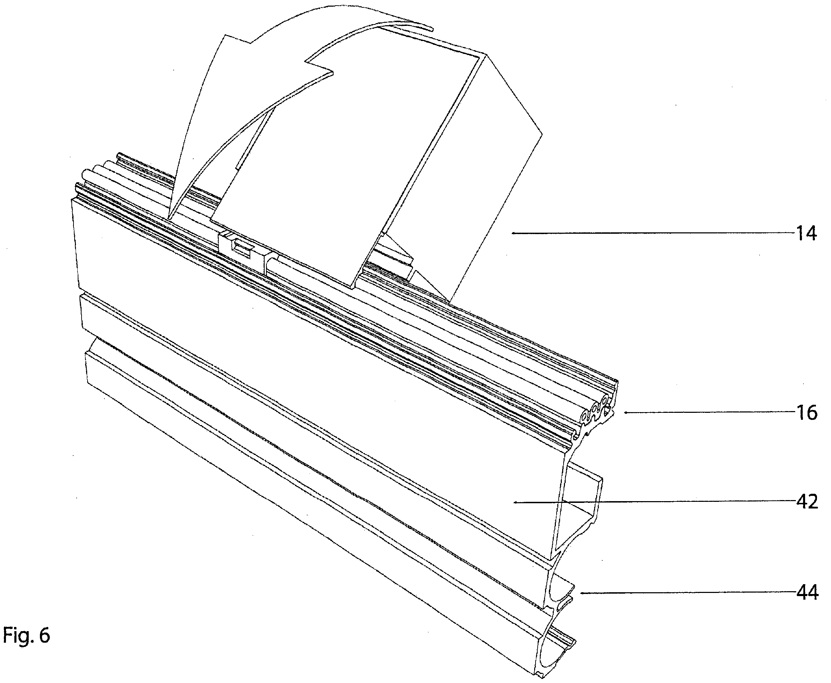

Wird nun das Gehäuse bzw. die Steckdose 14 gemäß Fig.5 und Fig.6 aus der Blattebene herausgeklappt, so dient das Filmscharnier 52 als exakte Führung, damit die Schneidkontakte 30, die in diesem Falle alle gabelförmig ausgebildet sind, auch exakt auf die entsprechenden Kabelstränge 40 treffen und diese mit ihrer gabelförmigen Spitze umschließen. Bei diesem Umschließen schneiden die gabelförmigen Enden der Schneidkontakte 30 die Isolation der Kabelstränge 40 des Flachkabels 12 auf und drücken sich an die elektrisch leitfähigen Adern der Kabelstränge 40 so fest an, dass ein sicherer Kontakt entsteht.

Ist nun der zweite Teil 32 zusammen mit der Steckdose 14 vollständig mit dem ersten Teil 28 der Schneidklemme 26 zusammengefügt, so sind diese beiden ersten und zweiten Teile 28 und 32 nunmehr irreversibel verrastet.

Dies dient nicht nur der Sicherheit, vor allen Dingen nach der Demontage der Steckdose 14, sondern auch zu einem gewissen Teil der Festigkeit der Steckdose 14 an dem ersten Kanal 16.

Dabei ist die Schneidklemme 26 nunmehr irreversibel mit dem Kanal 16 verbunden.

Da die nicht schneidenden Enden der Schneidklemmen 26 innerhalb des zweiten Teils 32 mittels in der Steckdose 14 angeordneten Kontaktstifte 34 lösbar elektrisch verbunden sind, ist es zur Erhöhung der Befestigungskraft vorteilhaft, die Steckdose 14 mit einem Befestigungsprofil 36 zu versehen.

Dieses Befestigungsprofil 36 bildet auch die zwei beschriebenen unterschiedlichen Ausführungsbeispiele. Es ist nämlich möglich und auch in den Figuren dargestellt, dass die Steckdose 14 das mit dem Kanal 16 verbindbare Befestigungsprofil aufweist, oder das ein Steckdosengehäuse 38 entweder in dessen Inneren abstützt oder mindestens teilweise aufnimmt, wobei die in Kanalrichtung weisende Oberfläche des Steckdosengehäuses 38 befestigungsprofilfrei sind.

Es befindet sich also einmal das Befestigungsprofil 36 innerhalb des Steckdosengehäuses 38. Wohingegen bei dem zweiten Ausführungsbeispiel das Befestigungsprofil 36 quasi die Steckdose 14 bzw. deren Gehäuse in sich aufnimmt und nur die Stirnseiten, die in Kabelrichtung weisen frei von diesem Befestigungsprofil 36 sind.

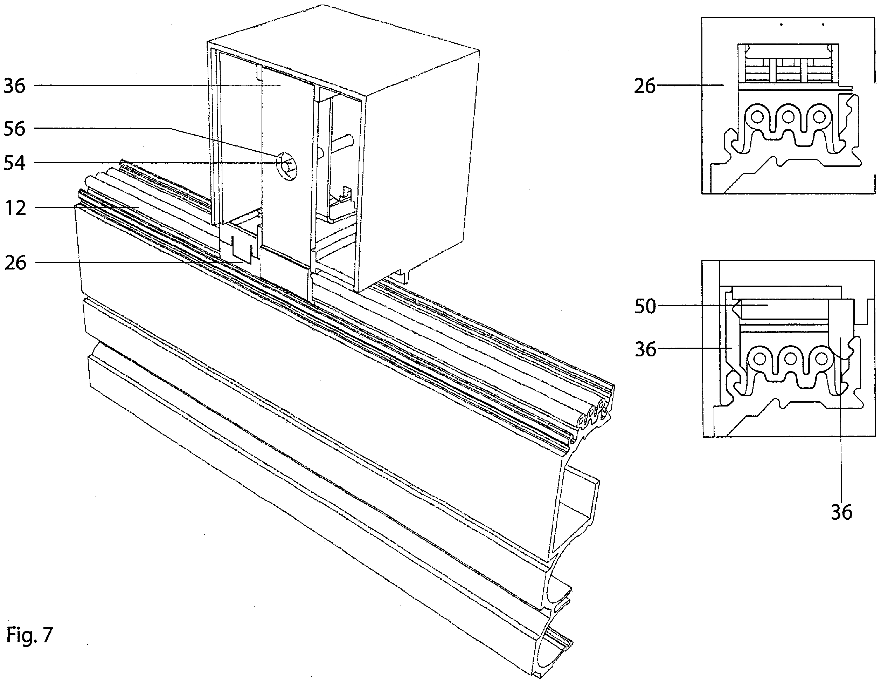

Des weiteren ist aus der Fig.7 und besonders deutlich aus dem unteren kleinen Querschnittsansichtsteil davon die irreversible Verrastung sichtbar. Sicherlich gibt es mehrere verschiedene Arten, diese irreversible Verrastung sicherzustellen. Die gezeichnete Verrastungsart dient lediglich als ein Beispiel dafür.

Des weiteren ist die Verschwenkrichtung auch nicht zwingend. Selbstverständlich kann von der rechten Seite oder von der linken Seite in Längsrichtung gesehen die Verschwenkung des Gehäuses bzw. der Steckdose 14 erfolgen. Allerdings ist dabei zu beachten, dass dann auch die Schneidklemme an einer anderen Stelle das Filmscharnier 52 benötigt.

Die größte Besonderheit der beschriebenen Ausführungsbeispiele zweier Kanalsysteme 10 liegt darin, dass die Steckdose 14 von dem Kanal 16 entfernbar ist, der zweite Teil 32 irreversibel mit dem ersten Teil 28 verrastet bleibt und die vom Flachkabel 12 wegweisenden Enden der Schneidkontakte 30 abdeckt. Dadurch verbleibt nach der Entfernung der Steckdose 14 die Schneidklemme 26 quasi als "Pflaster", so dass eine Berührung mit den Schneidkontakten nicht mehr möglich ist.

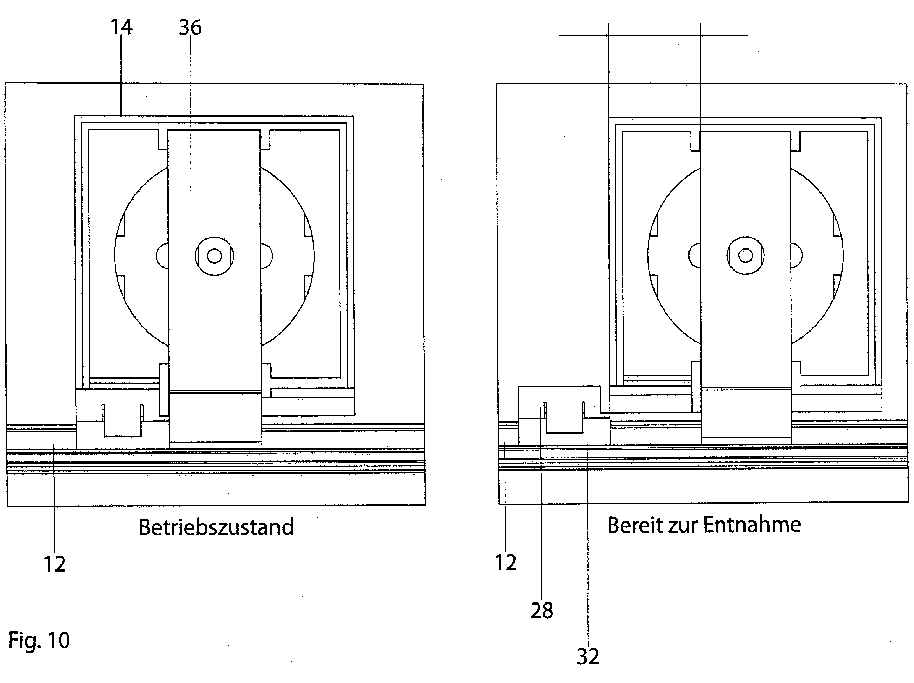

Ein weiterer Vorteil dieser verbleibenden Schneidklemme 26 besteht aber auch noch darin, dass diese einmal gesetzte und irreversibel verrastete Schneidklemme 26 erneut mit einer Steckdose 14 versehen werden kann, die dann entgegengesetzt der in Fig.10 gezeigten Bewegungen gehandhabt werden muss.

Ist einmal die Steckdose 14 fertig montiert, können dann die oberen Abdeckungen 24 rechts und links von der Steckdose 14 auf die Unterseite 20 des ersten Kanals 16 geschoben werden und bilden somit mit ihren drei Flanken einen vollständigen geschlossenen ersten Kanal 16.

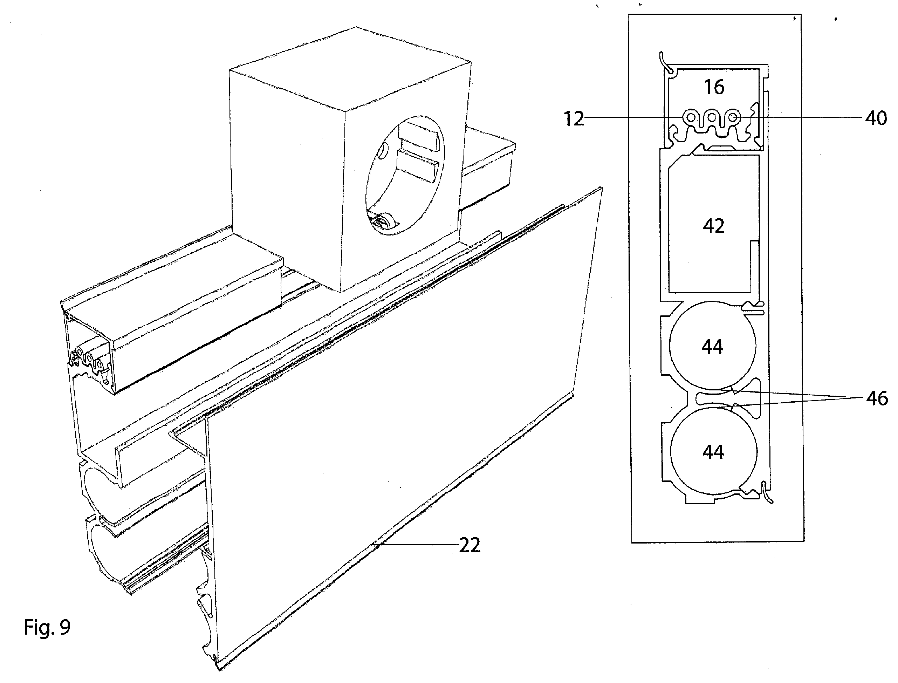

Als letztes wird dann nun der Frontdeckel 22 mit den in diesem Falle ersten bis vierten Kanälen 16, 42 und 44 lösbar verrastet. Die Verrastungsart, die bei diesen Ausführungsbeispielen gewählt wurde ist auch in Fig.9 im Querschnitt dargestellt.

Des weiteren ist zu bemerken, dass zur Erhöhung der Festigkeit das Befestigungsprofil 36 im ersten Kanal 16 mittels einer Sicherungsschraube 50 verspreizt wird. Es besteht daher eine Sicherung des Anschlussgehäuses am Kanalprofil durch Aufspreizen des Sicherungsbügels bzw. des Befestigungsprofils 36 auf Höhe der Kabelstränge 40. Dies ist eine mechanische Sicherung des Anschlussgehäuses bzw. der Steckdose 14 mit einer spitzen Sicherungsschraube 50, wodurch diese das Anschlussgehäuse erdet, und zwar in einem Arbeitsgang auch den metallenen Anschlussbügel am Profil, indem die beispielsweise Eloxalschicht durchstoßen wird.

Außerdem ergibt sich insbesondere aus der Fig.9, dass das Kabelsystem 10 aus bis zu drei Kanälen 16, 42 und 44 bestehen kann. Der zweite Kanal 42 dient zur Aufnahme von Audio-, Video- und CAT-Leitungen, wie zum Beispiel Lautsprecherkabel, Antennenkabel, Telefonkabel usw. Der zweite Kanal 42 ist ebenfalls mit dem Frontdeckel 22 lösbar verschließbar.

Des weiteren ist in den Figuren dargestellt, dass das Kanalsystem 10 einen dritten Kanal 44 aufweist, der in seinem Inneren mit Halteelementen 46 für Heizleitungen 48 versehen ist. Dieser dritte Kanal 44 schließt sich entweder an den ersten Kanal 16 oder an den zweiten Kanal 42 an. Es müssen also nicht immer drei Kanäle vorhanden sein.

Des weiteren ist bei den gezeigten Ausführungsbeispieles vorgesehen, dass der erste Kanal 16 entweder mit dem zweiten Kanal 42 oder/und mit dem dritten Kanal 44 einstückig ausgebildet ist.

Als Material für das Kanalsystem kann entweder Metall, Kunststoff oder eine Kombination daraus verwandt werden. Dies gilt selbstverständlich nicht für das Flachkabel 12, da dies immer eine Kombination aus Metall und Kunststoff aufweist.

Mit Hilfe des erfindungsgemäßen Kanalsystems 10 ist eine einfache, schnell zu verlegende und vielseitig brauchbare Lösung gefunden, bis zu drei Kanäle für Strom, Audio, Video und Heizung einfach und leicht und vor allen Dingen nachträglich auf Putz zu verlegen, wobei der größte Freiheitsgrad darin besteht, an jeder gewünschten Stelle eine Steckdose 14 anzubringen.

### Bezugszeichenliste:

- 10: Kanalsystem
- 12: Flachkabel
- 14: Steckdose
- 15: Gehäuserückwand
- 16: erster Kanal
- 18: Hinterseite
- 20: Unterseite
- 21: Vorderseite
- 22: Frontdeckel
- 24: obere Abdeckung
- 26: Schneidklemme
- 28: erster Teil
- 30: Schneidkontakt
- 32: zweiter Teil
- 34: Kontaktstift
- 36: Befestigungsprofil
- 38: Steckdosengehäuse
- 40: Kabelstrang
- 42: zweiter Kanal
- 44: dritter Kanal
- 46: Halteelemente
- 48: Heizungsleitungen
- 50: Sicherungsschraube
- 52: Filmscharnier
- 54: zentrale Schraube
- 56: Schraubhülse
- 58: Gehäuse

## Patentansprüche

1. Kanalsystem (10) mit mindestens einem ein mehradriges Flachkabel (12) und eine daran angeschlossene Steckdose (14) aufweisenden ersten Kanal (16), der eine Hinterseite (18), eine Unterseite (20) sowie eine mit einem lösbar daran befestigbaren Frontdeckel (22) vorhandenen Vorderselte (21) aufweist und mit einer lösbar befestigten oberen Abdeckung (24), **dadurch gekennzeichnet, dass** die obere Abdeckung im Bereich der befestigten Steckdose (14) entfernt ist und dass der elektrische Kontakt zwischen dem Flachkabel (12) und der Steckdose (14) über eine Schneidklemme (26) erfolgt, deren erster Teil (28) auf dem Flachkabel (12) aufliegt und deren zweiter die Schneidkontakte (30) aufweisender Teil (32) an der Steckdose (14) angeordnet ist, und dass die Steckdose (14) lösbar befestigt ist.

2. Kanalsystem (10) nach Anspruch 1, **dadurch gekennzeichnet, dass** die Schneidklemme (26) irreversibel mit dem Kanal (16) verbunden ist.

3. Kanalsystem (10) nach Anspruch 1 oder 2, **dadurch gekennzeichnet, dass** die nicht schneidenden Enden der Schneidklemmen (26) innerhalb des zweiten Teils (32) mittels in der Steckdose (14) angeordneter Kontaktstifte (34) lösbar elektrisch leitend verbunden sind.

4. Kanalsystem (10) nach einem der vorstehenden Ansprüche 1 bis 3, **dadurch gekennzeichnet, dass** der zweite Teil (32) irreversibel mit dem ersten Teil (28) verrastet ist, nachdem die Steckdose (14) in Richtung des Kanals (16) verschwenkt worden ist und gleichzeitig die Schneidkontakte (30) in das Flachkabel (12) eingedrungen sind.

5. Kanalsystem (10) nach Anspruch 4, **dadurch gekennzeichnet, dass** die Steckdose (14) entweder in Längsachsenrichtung des Kanals (16) im Uhrzeigersinn, entgegen des Uhrzeigersinnes oder quer zur Längsachsenrichtung des Kanals (16) zur Montage verschwenkt worden ist.

6. Kanalsystem (10) nach einem der Ansprüche 1 bis 5, **dadurch gekennzeichnet, dass** die Steckdose (14) von dem Kanal (16) entfernbar ist und der zweite Teil (32) irreversibel mit dem ersten Teil (28) verrastet bleibt und die vom Flachkabel (12) wegweisenden Enden der Schneidkontakte (30) abdeckt.

7. Kanalsystem (10) nach einem der Ansprüche 1 bis 6, **dadurch gekennzeichnet, dass** die Steckdose (14) ein mit dem Kanal (16) verbindbares Befestigungsprofil (36) aufweist, dass ein Steckdosengehäuse (38) entweder in dessen inneren abstützt oder mindestens teilweise aufnimmt, wobei die in Kanalrichtung weisenden Oberflächen des Steckdosengehäuses (38) befestigungsprofilfrei sind.

8. Kanalsystem (10) nach einem der Ansprüche 1 bis 7, **dadurch gekennzeichnet, dass** die Unterseite (20) derartig profiliert ist, dass die dazu passende zur Unterseite (20) weisende Oberfläche des mehradrigen Flachkabels (12) lediglich in einer vorbestimmten Ausrichtung zusammen fügbar ist, damit eine Anordnung der nebeneinander liegenden Kabelstränge (40) des Flachkabels (12) immer gleich ist.

9. Kanalsystem (10) nach einem der Ansprüche 1 bis 8, **gekennzeichnet durch** einen zweiten Kanal (42), der von der Unterseite (20) sich der Abdeckung (24) entgegengesetzt erstreckt.

10. Kanalsystem (10) nach Anspruch 9, **dadurch gekennzeichnet, dass** der zweite Kanal (42) ebenfalls von dem Frontdeckel (22) lösbar verschließbar ist.

11. Kanalsystem (10) nach einem der Ansprüche 1 bis 10, **gekennzeichnet durch** einen dritten Kanal (44), der in seinem Inneren mit Halteelementen (46) für Heizungsleitungen (48) versehen ist und sich entweder an den ersten Kanal (16) oder an dem zweiten Kanal (42) anschließt.

12. Kanalsystem (10) nach einem der Ansprüche 7 bis 11, **dadurch gekennzeichnet, dass** das Befestigungsprofil (36) im ersten Kanal mittels einer Sicherungsschraube (50) verspreizt wird.

13. Kanalsystem (10) nach einem der Ansprüche 9 bis 12, **dadurch gekennzeichnet, dass** der erste Kanal (12) entweder mit dem zweiten Kanal (42) oder/und mit dem dritten Kanal (44) einstückig ausgebildet ist.

14. Kanalsystem (10) nach einem der Ansprüche 1 bis 13, **dadurch gekennzeichnet, dass** der erste Teil (28) mittels eines Filmscharniers (52) mit dem zweiten Teil (32) der Schneidklemme (26) verbunden ist.

15. Kanalsystem (10) nach einem der Ansprüche 1 bis 14, **dadurch gekennzeichnet, dass** es aus Metall, Kunststoff oder einer Kombination daraus besteht.

## Claims

1. Channel system (10) having at least one first channel (16) which comprises a multi-core flat cable (12) and a socket (14) connected thereto and comprises a rear side (18), a bottom side (20) and a front side (21) which is provided with a front cover (22) detachably fastened thereto, and having a detachably fastened upper cover (24), **characterised in that** the upper cover is removed in the region of the fastened socket (14), and **in that** the electrical contact between the flat cable (12) and the socket (14) is effected via an insulation displacement termination (26), the first part (28) of which rests on the flat cable (12) and the second part (32) of which comprising the insulation displacement contacts (30) is arranged on the socket (14), and **in that** the socket (14) is detachably fastened.

2. Channel system (10) as claimed in claim 1, **characterised in that** the insulation displacement termination (26) is connected irreversibly to the channel (16).

3. Channel system (10) as claimed in claim 1 or 2, **characterised in that** the non-cutting ends of the insulation displacement terminations (26) within the second part (32) are detachably connected in an electrically conductive manner by means of contact pins (34) arranged in the socket (14).

4. Channel system (10) as claimed in any one of the preceding claims 1 to 3, **characterised in that** the second part (32) is latched irreversibly with the first part (28), after the socket (14) has been pivoted in the direction of the channel (16) and at the same time the insulation displacement contacts (30) have penetrated the flat cable (12).

5. Channel system (10) as claimed in claim 4, **characterised in that** for assembly purposes the socket (14) has been pivoted either in the longitudinal axial direction of the channel (16) in the clockwise direction, in the anti-clockwise direction or transverse to the longitudinal axial direction of the channel (16).

6. Channel system (10) as claimed in any one of claims 1 to 5, **characterised in that** the socket (14) can be removed from the channel (16) and the second part (32) remains

7. Channel system (10) as claimed in any one of claims 1 to 6, **characterised in that** the socket (14) comprises a fastening profile (36) which can be connected to the channel (16) and either supports a socket housing (38) in the interior thereof or at least partially receives said housing, wherein the surfaces of the socket housing (38) pointing in the channel direction are not provided with the fastening profile.

8. Channel system (10) as claimed in any one of claims 1 to 7, **characterised in that** the bottom side (20) is profiled such that the surface of the multi-core flat cable (12) facing the bottom side (20) and being adapted thereto can be joined together only in a predetermined orientation and therefore an arrangement of the mutually adjacent cable strands (40) of the flat cable (12) is always the same.

9. Channel system (10) as claimed in any one of claims 1 to 8, **characterised by** a second channel (42) extending away from the bottom side (20) in a direction opposite to the cover (24).

10. Channel system (10) as claimed in claim 9, **characterised in that** the second channel (42) can likewise be detachably closed by the front cover (22).

11. Channel system (10) as claimed in any one of claims 1 to 10, **characterised by** a third channel (44) which is provided in its interior with securing elements (46) for heating conduits (48) and adjoins either the first channel (16) or the second channel (42).

12. Channel system (10) as claimed in any one of claims 7 to 11, **characterised in that** the fastening profile (36) is braced in the first channel by means of a securing screw (50).

13. Channel system (10) as claimed in any one of claims 9 to 12, **characterised in that** the first channel (12) is formed in one piece either with the second channel (42) and/or with the third channel (44).

14. Channel system (10) as claimed in any one of claims 1 to 13, **characterised in that** the first part (28) is connected to the second part (32) of the insulation displacement termination (26) by means of a film hinge (52).

15. Channel system (10) as claimed in any one of claims 1 to 14, **characterised in that** it consists of metal, plastics material, or a combination thereof.

## Revendications

1. Système de canal (10) avec au moins un premier canal (16) présentant un câble plat (12) multiconducteur et une prise de courant (14) raccordée à ce dernier, lequel premier canal présente un côté arrière (18), un côté inférieur (20) ainsi qu'un côté avant (21) présent avec un couvercle frontal (22) pouvant y être fixé de manière amovible, et avec un recouvrement (24) supérieur fixé de manière amovible, **caractérisé en ce que** le recouvrement supérieur dans la zone de la prise de courant (14) fixée est retiré, et que le contact électrique entre le câble plat (12) et la prise de courant (14) est effectué par l'intermédiaire d'une borne de sectionnement (26), dont la première partie (28) repose sur le câble plat (12) et la deuxième partie (32) présentant les contacts de sectionnement (30) est disposée au niveau de la prise de courant (14), et que la prise de courant (14) est fixée de manière amovible.

2. Système de canal (10) selon la revendication 1, **caractérisé en ce que** la borne de sectionnement (26) est 20reliée de manière irréversible au canal (16).

3. Système de canal (10) selon la revendication 1 ou 2, **caractérisé en ce que** les extrémités de non-sectionnement des bornes de sectionnement (26) sont reliées de manière amovible et conductrice à l'intérieur de la 25deuxième partie (32) au moyen des tiges de contact (34) disposées dans la prise de courant (14).

4. Système de canal (10) selon l'une quelconque des revendications précédentes 1 à 3, **caractérisé en ce que** la deuxième partie (32) est enclenchée de manière irréversible 30avec la première partie (28), après que le raccordement (14) a été pivoté en direction du canal (16) et que de manière simultanée les contacts de sectionnement (30) sont entrés dans le câble plat (12).

5. Système de canal (10) selon la revendication 4, 5**caractérisé en ce que** la prise de courant (14) a été pivotée aux fins du montage soit dans la direction axiale longitudinale du canal (16) dans le sens des aiguilles d'une montre, dans le sens inverse des aiguilles d'une montre soit de manière transversale par rapport à la direction axiale longitudinale du canal (16).

6. Système de canal (10) selon l'une quelconque des revendications 1 à 5, **caractérisé en ce que** la prise de courant (14) peut être retirée du canal (16), et la deuxième partie (32) reste enclenchée de manière irréversible avec la première partie (28) et recouvre les extrémités, pointant de manière à s'éloigner du câble plat (12), des contacts de sectionnement (30).

7. Système de canal (10) selon l'une quelconque des revendications 1 à 6, **caractérisé en ce que** la prise de courant (14) présente un profil de fixation (36) pouvant être relié au canal (16), qui soit soutient dans son espace intérieur un boîtier de prise de courant (38) soit le reçoit au moins en partie, dans lequel les surfaces pointant dans la direction de canal du boîtier de prise de courant (38) sont sans profil de fixation.

8. Système de canal (10) selon l'une quelconque des revendications 1 à 7, **caractérisé en ce que** le côté inférieur (20) est profilé de telle manière que la surface adaptée pointant en direction du côté inférieur (20) du 30câble plat (12) multiconducteur peut être assemblée seulement dans une orientation prédéfinie afin qu'un agencement des faisceaux de câbles (40) situés les uns à côté des autres du câble plat (12) soit toujours identique.

9. Système de canal (10) selon l'une quelconque des revendications 1 à 8, **caractérisé par** un deuxième canal 5(42), qui s'étend depuis le côté inférieur (20) à l'opposé du recouvrement (24).

10. Système de canal (10) selon la revendication 9, **caractérisé en ce que** le deuxième canal (42) peut être fermé de manière amovible également par le couvercle frontal (22).

11. Système de canal (10) selon l'une quelconque des revendications 1 à 10, **caractérisé par** un troisième canal (44), qui est pourvu, dans son espace intérieur, d'éléments de maintien (46) pour des conduites de chauffage (48) et 15qui se raccorde soit au premier canal (16) soit au deuxième canal (42).

12. Système de canal (10) selon l'une quelconque des revendications 7 à 11, **caractérisé en ce que** le profil de fixation (36) est écarté dans le premier canal au moyen 20d'une vis de blocage (50).

13. Système de canal (10) selon l'une quelconque des revendications 9 à 12, **caractérisé en ce que** le premier canal (12) est réalisé d'un seul tenant soit avec le deuxième canal (42) ou soit avec le troisième canal (44).

14. Système de canal (10) selon l'une quelconque des revendications 1 à 13, **caractérisé en ce que** la première partie (28) est reliée au moyen d'une charnière pelliculaire (52) à la deuxième partie (32) de la borne de sectionnement (26).

15. Système de canal (10) selon l'une quelconque des revendications 1 à 14, **caractérisé en ce qu'**il est constitué de métal, de matière plastique ou d'une combinaison de ces derniers.
